## Europäisches Patentamt

## European Patent Office

## Office européen des brevets

(11) Publication number: **0 098 336**
**B1**

(12) **EUROPEAN PATENT SPECIFICATION**

(45) Date of publication of patent specification: **10.12.86**

(21) Application number: **82303442.6**

(22) Date of filing: **01.07.82**

(51) Int. Cl.⁴: **A 01 D 45/02, A 01 D 45/00**

(54) **Row crop unit.**

(43) Date of publication of application:
**18.01.84 Bulletin 84/03**

(45) Publication of the grant of the patent:
**10.12.86 Bulletin 86/50**

(84) Designated Contracting States:
**DE FR IT**

(56) References cited:
**CH-A- 347 996**
**US-A-3 339 354**
**US-A-3 585 789**
**US-A-3 660 970**
**US-A-3 736 733**
**US-A-4 086 749**
**US-A-4 115 983**
**US-A-4 271 661**

(73) Proprietor: **MASSEY-FERGUSON SERVICES N.V.**
**Abraham de Veerstraat 7A**
**Curaçao Netherlands Antilles (NL)**

(72) Inventor: **Dean, Earl Edward**
**27405 Sutherland**
**Warren Michigan (US)**
Inventor: **Quade, Marshall Lawrence**
**R.D.6, Box 1652**
**Mt. Pleasant Pennsylvania 15666 (US)**
Inventor: **Temple, William Frank**
**1905 Robinhood**
**Albany Georgia 31707 (US)**

(74) Representative: **Jones, David Bryn**
**Patent and Trade Marks Department Massey-Ferguson**
**Stareton, near Kenilworth Warwickshire CV8 2LJ (GB)**

Courier Press, Leamington Spa, England.

## Description

The present invention relates generally to row crop units for crop harvesting machines, and more particularly to a row crop unit of the type employing a plurality of endless belts.

It is customary to provide a row crop unit on a forage harvester when standing corn is to be processed into silage. The row crop unit may engage one, two or more rows of corn. For each row of standing corn a cutting mechanism and a gathering and conveying mechanism is provided. Various types of conveying mechanisms have been employed, but the most widely accepted type embodies two side by side metal conveyor chains provided with lugs, the chains engaging crop material between adjacent rearwardly running runs. The chains may be provided with metal lugs, as shown in U.S. patent 3,339,354, resilient flexible lugs. When chains and lugs of conventional design are employed, it is necessary to provide upper and lower conveying chains as the crop material is not firmly engaged between chains. However, when using chains provided with elements, such as shown in U.S. 3,339,354 and U.S. 4,115,983, it is only necessary to provide one pair of side by side conveyor chains for each row as the crop material is gripped between adjacent runs of the conveyor. A primary disadvantage of both of these forms of conveying mechanisms is that if one of the chains breaks, it in turn may enter into the cutting mechanism of the forage harvester causing severe damage to the knives, the knife supports, the shear bar, etc. Additional disadvantages of these conveying mechanisms are high wear rates, noisy operation, high weight and relatively high cost.

In order to overcome the foregoing disadvantages, it has been proposed in U.S. patent 3,854,272 and 3,940,913 to utilize a gathering mechanism utilizing crop gathering belts of the molded type which is composed of rubber or plastic and is occasionally referred to as snowmobile belting. The molded type of belts have drive lugs on one side of the belt and crop engaging or gathering lugs on the other side.

Prior art designs which have utilized molded crop gathering belts, while overcoming many of the disadvantages of chain type belts, have experienced other problems. The basic problem is that these belts tend to jump the driving or idler sprockets, or they tend to shift thereon causing damage to the drive and gathering lugs which will eventually result in failure of the belts. One of the reasons for these problems is that these belts have been utilized in prior art designs to drive a rotary cutting mechanism which severs the standing crop. Since the rotary cutting mechanism requires a fairly high torque, particularly when the cutting mechanism is not properly adjusted, the belt which drives the cutting mechanism tends to elongate to the point where it jumps off the sprockets or breaks. Also, the belt may be thrown from the sprockets if the cutting mechanism jams. A second reason for these problems arises from trash clearance. Thus, in prior art designs the trash tends to build-up on the cutting mechanism, the sprockets and the supporting frame disposed below the belts, the accumulated trash causing the belts to jump the sprockets or to stretch to a point where they no longer perform in a satisfactory manner. Another reason for these problems is that prior art tensioning mechanism fail to maintain proper tension of the belts.

Another disadvantage of prior designs which utilize molded belts to drive a rotary cutting mechanism is that it is not possible to properly locate the forward ends of adjacent belts with respect to the cutting mechanism. Thus, when one of the belts is utilized to drive a rotary cutting mechanism it is not possible to properly gather and engage the crop material between adjacent rearwardly running sides of the co-operating gathering belts. It is desirable that crop material be firmly engaged before cutting, since if the material is not engaged between adjacent runs of the conveying mechanism the crop material may fall to the ground when it is cut and not enter into the harvester. In addition, with the prior art constructions, the belts cannot properly gather the crop material.

It is an object of the present invention to overcome the disadvantages of known prior art row crop unit constructions employing crop gathering belts of the molded type.

More specifically, it is an object of the present invention to provide an improved row crop unit construction of the type employing molded crop gathering belts which will eliminate the build-up of trash within the row crop unit, which trash could interfere with the proper running of the molded belts.

Accordingly, the present invention provides a row crop unit for a crop harvesting machine comprising a pair of fore-and-aft extending side by side endless crop gathering belts; a drive sprocket associated with the rear end of each of the crop gathering belts, a plurality of forward idler assemblies each being associated with the forward end of a crop gathering belt and each including an idler rotatably mounted on an idler shaft; a frame assembly comprising a cross-frame member and a plurality of forwardly extending frame members connected at their rear ends to the cross frame member and supporting the said idler shafts; first drive means associated with the frame assembly and including drive shafts on which the drive sprockets are mounted, the first drive means being capable of causing the endless crop gathering belts to be driven; cutting means disposed behind the forward end of the crop gathering belts; and second drive means capable of driving the cutting means, characterised in that the crop gathering belts are the molded type, and in that each of the said idler shafts is supported by one of the said forwardly extending frames member only at its upper end so that the frame assembly of the row crops unit does not extend below the said idlers.

Other objects and advantages of this invention will become apparent from the following detailed description taken in conjunction with the accompanying drawings in which a preferred form of this invention is illustrated.

Figure 1 is a view taken from the front and above the forward end of a row crop unit of the type adapted to harvest two rows, a portion of the sheet metal disposed above the conveying belts not being shown.

Figure 2 is a view similar to Figure 1 in which all sheet metal, including the forward snouts, has been removed.

Figure 3 is a view taken generally along the line 3—3 in Figure 2.

Figure 4 is a view taken generally along the line 4—4 in Figure 3 illustrating the driving mechanism for the endless belts.

Figure 5 is a view taken generally along the line 5—5 in Figure 2.

Figure 6 is a bottom view of the forward idler sprocket assembly and the underlying portion of the cutting mechanism shown in Figure 5.

In the following description right hand and left hand reference will be determined by standing to the rear of the machine and facing its direction of travel.

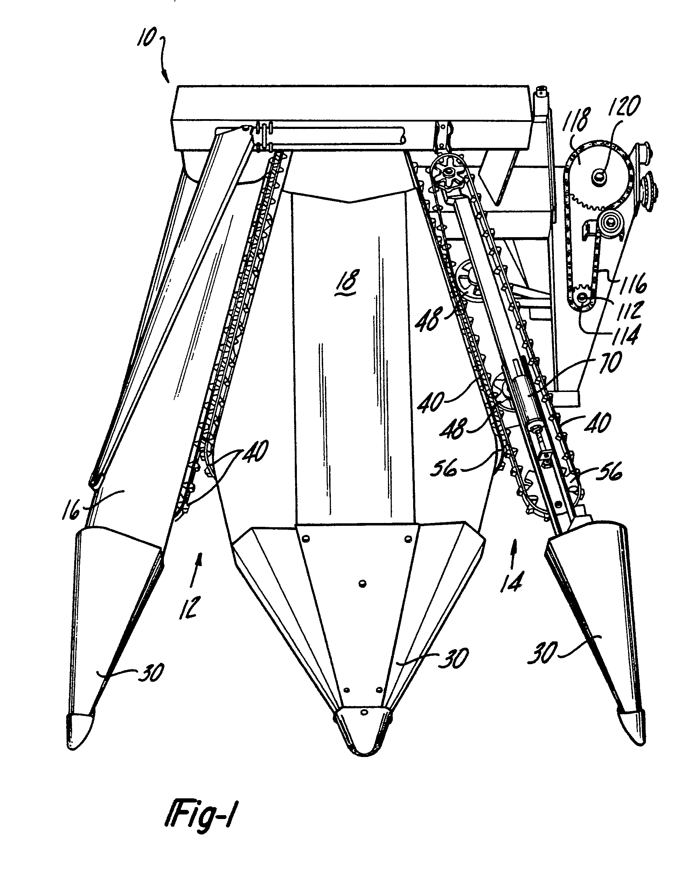

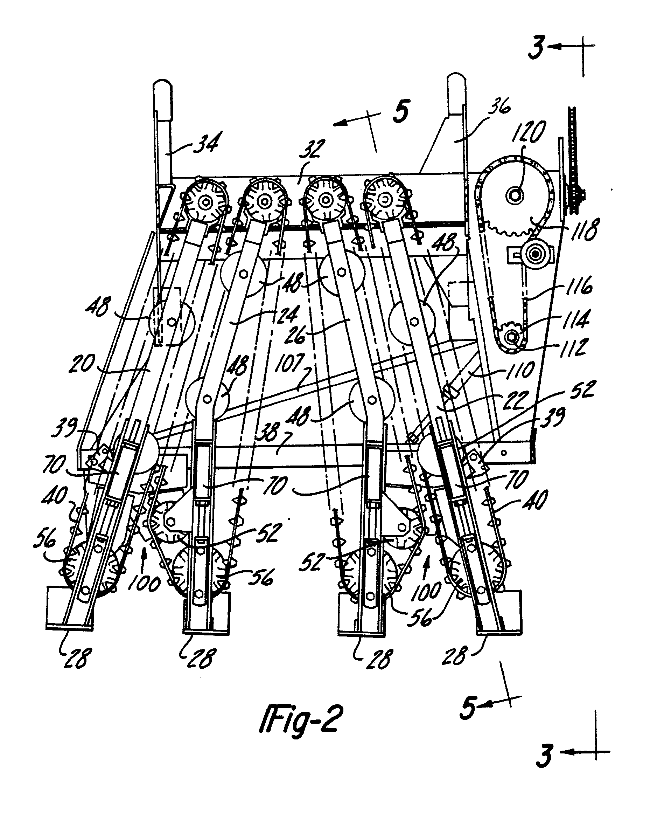

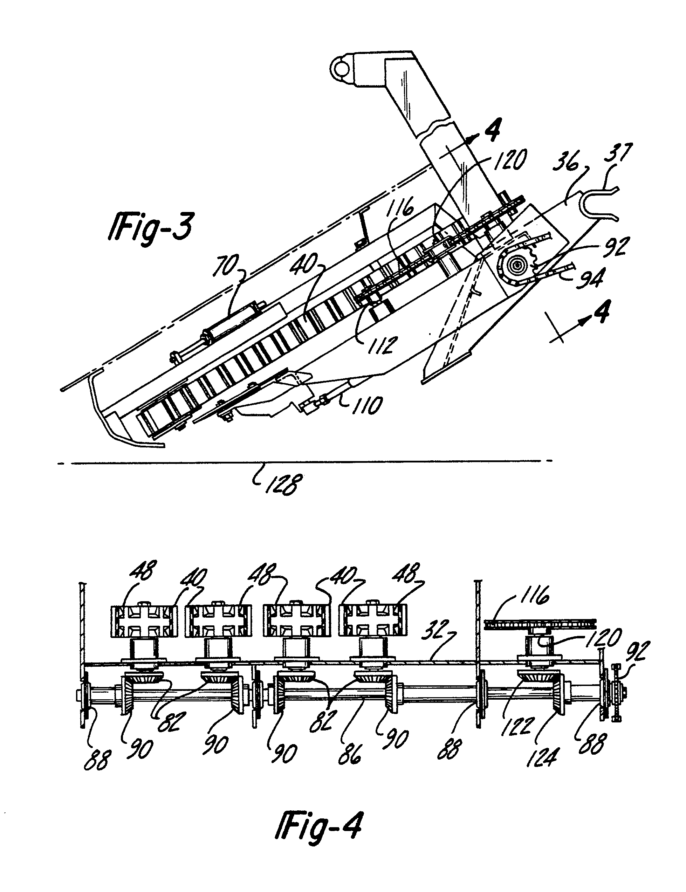

The row crop unit in which the principals of the present invention have been incorporated is indicated generally at 10 in Figure 1. This unit is capable of harvesting two standing rows and thus is proved with right and left stalk receiving passageways 12, 14. The unit further includes right and left fenders, only the right fender 16 being shown. This unit further includes a central section 18. The fenders and central section 18 are in turn supported by forwardly and downwardly extending frame members shown in Figure 2. Thus, the right fender is supported by right frame member 20, the left fender is supported by a left frame member 22, and the centre section is supported by right and left intermediate frame members 24, 26, respectively. Each of the frame members 20, 22, 24, 26 terminates in a forwardly located skid member 28. Floating snouts 30 are in turn secured to the skid members 28. The rearward ends of the frame members 20, 22, 24, 26 are interconnected in turn to a cross frame member 32 in a manner more fully set out below. Right and left outrigger frame assemblies 34, 36 are secured to the ends of the cross frame member 32. The outrigger frame assemblies extend rearwardly and each is provided with a clevis 37 (Figure 3) which may be secured to a cross shaft on a forage harvester by a pin. The forward ends of the outrigger frame assemblies also support an intermediate cross frame member 38 to which intermediate portions of the fore and aft extending frame members 20, 22, 24, 26 are secured by suitable brackets 39 (only two of which are shown).

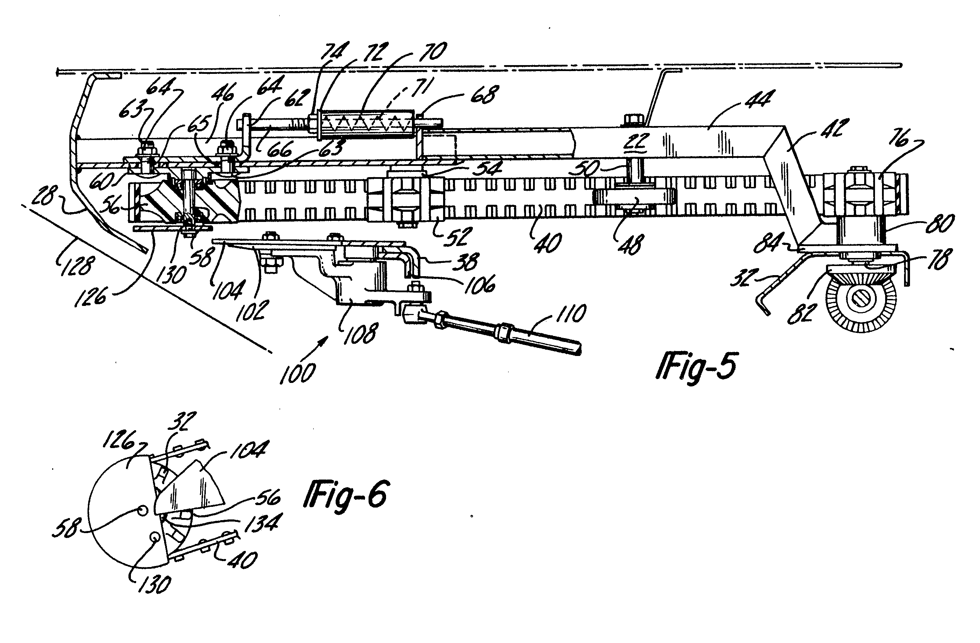

Each of the fore and aft frame members 20, 22, 24, 26 supports an endless crop gathering belt 40 of the moulded type. The manner in which these belts are mounted can best be appreciated from an inspection of Figure 5. Each fore and aft frame member 22 is provided with an initial upwardly and forwardly extending section 42, an intermediate downwardly and forwardly extending box section 44, and a forward channel section 46 to which the skids 28 are secured. An idler 48 is carried by the lower end of an idler shaft 50 whose upper end is secured to the intermediate section 44. Similarly, an intermediate idler sprocket 52 is carried by the lower end of an idler shaft 54 which is also carried by the frame 22. As can be seen from Figure 2 the idlers 48 and 52 are staggered to provide belt relief when large volumes of crop of groups of corn ears are held between the belts and travel rearwardly.

As the belts are essentially inelastic it is necessary to provide a spring loaded tensioning mechanism. Thus, a tensioning mechanism is provided, the tensioning mechanism including a tensioning idler sprocket rotatably carried on an idler shaft 58 whose upper end is secured to a plate 60. The plate 60 is in turn secured to an L-shaped plate 62 by means of carriage bolts 63 which pass through slots (no number) in the bottom of the channel section 46 and nuts 64. Spacers 65 are disposed within the slots about bolts 63. The tensioning mechanism further includes a shaft 66 welded at its forward end to the L-shaped member 62, the shaft having an intermediate threaded portion, and a rear end portion which passes through an aperture in abutment 68 at one end of the box section 44. A tube 70 surrounds a coil spring 71 which has one end bearing against abutment 68 and the other end bearing against washer or stop 72 which is held in adjusted position by nut 74. It can be appreciated that the tension on belt 40 can be adjusted merely by adjusting the nut 74 until the desired tension within the belt 40 is attained.

As can be seen from Figure 2 the forward tensioning idler 56 on frame members 24 and 26 is spaced away from the adjacent tensioning idler on frame members 20 and 22. However, the idler sprocket 52 on frame members 24 and 26 is spaced closely adjacent the belt carried by the adjacent frame member. This construction insures proper gathering of the crop material.

Each of the molded belts 40 is driven from a drive sprocket 76 disposed at the rear end of the belt. Each of the sprockets 76 is mounted on the upper end of a vertically extending hex drive shaft 78 which passes through the cross frame member 32 and an associated bearing housing 80, the shaft having a bevel gear 82 mounted on its lower end. By employing a hex shaft proper timing of the belt lugs is maintained. As can best be seen from Figure 5 the rear end of section 42 of the fore and aft extending frame 20, 22, 24, 26 is rigidly secured to a forward extension of the bearing housing and support 80. The housing and support 80 is provided with a lower outwardly flange 84 which is in turn fastened to the cross frame member 32 by threaded fasteners (not shown) for limited adjustable movement about the axis of the shaft 78.

It should be noted at this point that the row crop unit may be adjusted for differing widths of row crop spacing. Thus, the sheet metal of the center section 18 and the associated snout 30 can be telescoped to provide for differing row spacings. The support frame members 20, 22, 24, 26 can be adjusted by loosening the fasteners which secure the flange 84 to the cross frame member, by securing the mounting brackets 39 to differing locations on the intermediate cross frame member 38, and by tightening the flange 84 fasteners.

A cross shaft 86 (Figure 4) is mounted within the cross frame member 32 by bearing blocks 88, the cross shaft 86 in turn carrying driving bevel gears 90 which mesh with the bevel gears 82. The shaft 86 is in turn driven through sprocket 92 and chain 94, the chain 94 in turn meshing with another sprocket (not shown) concentric with the pivot shaft which receives the trunnion 37. As can be seen from Figure 4 adjacent pairs of belts 40 will be driven in opposite directions, the adjacent runs of a pair of associated belts moving rearwardly, thus, engaging and conveying the lower ends of crop material towards the forage harvester.

As the crop enters the row crop unit it is severed by a cut off mechanism indicated generally at 100. Each of the cut off mechanism employs an oscillating sickle 102 and stationary side knives 104. The side knives are carried by a generally U-shaped bracket 106 whose rearward end is secured to the intermediate cross frame member 38. An intermediate portion of the bracket carries a downwardly extending pivot pin which receives the sickle holder 108. The sickle holder 108 is caused to oscillator from a pitman arm 110. The other end of each pitman arm 110 is secured by a bearing to a crank (not shown) carried by a shaft 112. The shaft 112 carries a sprocket 114 which is rotated by chain 116 which, in turn, passes over a driving sprocket 118. The drive sprocket 118 is in turn mounted on a shaft 120 which carries a bevel gear 122 which is in turn driven by a bevel gear 124 mounted on the cross shaft 86.

It is a feature of this invention that adequate clearance is provided below the idler sprockets 48, 52, 56 to permit trash to fall to the ground. In this connection, it should be noted that shaft 58 carries a belt retainer 126. As can be seen from Figure 6 the retainer 126 is so shaped that most of the rearward portion of the forward idler 56 is exposed. While a portion of one of the side knives 104 extends below the idler 56 there is adequate clearance for trash to clear the knife 104 to fall to the ground, indicated by line 128 in Figures 3 and 5. The belt retainer additionally carries a pin 130 (Figure 6) which acts to discharge material received in the groove between the lugs 132 and hub 134 of the sprocket. Belt retainers (not shown) may also be provided for other sprockets, such as sprocket 76. Similarly, a scraper may also be employed for drive sprocket 76, which scraper could be in the form of a plate extending upwardly and rearwardly from section 432.

The operation of the row crop unit described above should be obvious to those who have ordinary skill in the art. By utilizing a cut off mechanism 100 which is driven independently of molded belts 40 it is possible to achieve significantly higher lift of the belts. In addition, by employing an overhead fore and aft extending frame 20, 22, 24, 26 for each of the belts 40 it is possible to provide trash clearance to the ground whereby undue trash build-up within the row crop unit will be avoided, also significantly improving the performance of the belts. By locating the cut off mechanism in the position illustrated in the figures it is possible to engage the crop material as the initial severing action takes place. If the severing were to take place before the crop material is engaged, it is possible for the crop material to fall down prior to engagement by the belts. This is particularly true when operating the row crop unit with a tail wind in tall crop conditions. If the crop material were to be engaged for a significant period of time before severing were to take place this would cause, due to the upward inclination of the belts 40, a downward force on the belts that would cause them to be damaged or pulled from their sprockets.

The row crop unit as described above is in addition adjustable for various row spacings, and is suitable for use with tangled and down crops due to the provision of the floating snouts 30.

**Claims**

1. A row crop unit (10) for a crop harvesting machine comprising a pair of fore-and-aft extending side by side endless crop gathering belts (40); a drive sprocket (76) associated with the rear end of each of the crop gathering belts (40); a plurality of forward idler assemblies, each being associated with the forward end of a crop gathering belt (40) and each including an idler (56) rotatably mounted on an idler shaft (58); a frame assembly comprising a cross-frame member (32) and a plurality of forwardly extending frame members (20, 22, 24, 26) connected at their rear ends to the cross frame member and supporting the said idler shafts (58); first drive means associated with the frame assembly and including drive shafts (78) on which the drive sprockets (76) are mounted, the first drive means being capable of causing the endless crop gathering belts to be driven; cutting means (100) disposed behind the forward end of the crop gathering belts; and second drive means capable of driving the cutting means, characterised in that the crop gathering belts (40) are the molded type, and in that each of the said idler shafts (58) is supported by one of the said forwardly extending frame members (20, 22, 24, 26) only at its upper end so that the frame assembly of the row crop unit does not extend below the said idlers (56).

2. A row crop unit as claimed in claim 1 wherein a forward idler (56) and at least one drive sprocket (76) is associated with each of the belts, the forward idlers (56) being spaced further away from each other than the drive sprockets (76) to ensure proper gathering of the crop material.

3. A row crop unit as claimed in either of the preceding claims wherein the first drive means includes a cross shaft (86) disposed in driving connection with the drive shafts (78) wherein the cutting means (100) includes an oscillating sickle (102), and wherein the second drive means includes a pitman arm (110) interconnecting the cross shaft (86) with the sickle (102).

4. A row crop unit as claimed in any one of the preceding claims in which a spring loaded tensioning mechanism for each of said belts (40) includes a plate (60) to which the upper end of an idler shaft (58) is secured, means (62, 63, 64) mounting the plate (60) on a forwardly extending frame member (46) for longitudinal sliding movement, an abutment (68) on the forwardly extending frame member, a spring (71) one end of which bears against the abutment (68), and an adjustable stop (74) secured to the plate mounting means, one end of the spring (71) bearing against the adjustable stop (74).

5. A row crop unit as claimed in any one of the preceding claims wherein each of the pair of endless crop gathering belts is disposed over a plurality of idler assemblies (48), the idler assemblies (48) being staggered to provide for belt relief when large clumps of crop material are held between the belts (40).

6. A row crop unit as claimed in any one of the preceding claims wherein at least one of said idler assemblies is provided with a belt retainer (126).

7. A row crop unit as claimed in claim 6 wherein the belt retainer (126) is further provided with a scraper pin (130) to facilitate the discharge of trash from the belt (40), the belt retainer being carried by the said idler shaft (58).

8. A row crop unit as claimed in any one of the preceding claims wherein the frame assembly further includes laterally spaced apart fore-and-aft extending outrigger frames (34, 36) secured to the ends of the cross frame member (32), and a transversely extending frame member (38) extending between the forward ends of the outrigger frames, said cutting means (100) being supported by said transversely extending frame member (38).

9. A row crop unit as claimed in claim 8 wherein two pairs of cooperating crop gathering belts (40) and two cutting means (110) are provided, there being one cutting means for each pair of cooperating belts, both pairs of belts and said cutting means being disposed between the fore-and-aft extending outrigger frames (34, 36).

10. A row crop unit as claimed in claim 8 or 9 wherein intermediate portions of the forwardly extending frame members (20, 22, 24, 26) are secured to said transversely extending frame member (38).

**Patentansprüche**

1. Reihenfruchterntegerät (10) für eine Erntemaschine, mit einem Paar längs gerichteter und Seite an Seite angeordneter endloser, das Erntegut erfassender Bänder (40), einem dem rückwärtigen Ende eines jeden Bandes (40) zugeordneten Antriebskettenrad (76), einer Anzahl vorderer, jeweils dem Vorderende der Bänder (40) augeordneter, aus jeweils einem drehbar auf einer Leitradwelle (58) angeordneten Leitrad (56) bestehenden Leitradgruppen, einem Rahmen, welcher ein Rahmenquerteil (32) und eine Anzahl sich nach vorn erstreckender, an ihren rückwärtigen Enden mit dem Rahmenquerteil verbundener und die Leitradwellen (58) aufnehmender Rahmenteile (20, 22, 24, 26) aufweist, einer ersten mit dem Rahmen verbundenen und Antriebswellen (78) mit daran befestigten Antriebskettenrädern (76) enthaltenden Gruppe von Antriebsmitteln, welche die endlosen, das Erntegut erfassenden Bänder (40) antreiben, hinter den vorderen Enden der Bänder angeordneten Schneideinrichtungen (100), sowie einer zweiten Gruppe von Antriebsmitteln zum Antrieb der Schneideinrichtungen, dadurch gekennzeichnet, dass die das Erntegut erfassenden Bänder (40) Formteile sind und jede der Leitradwellen (58) auf jeweils einem der sich nach vorn erstreckenden Rahmenteile (20, 22, 24, 26) lediglich an ihrem oberen Ende abgestützt ist, so dass sich der Rahmen der Reihenfruchterntegerätes nicht unterhalb der Leiträder (56) erstreckt.

2. Reihenfruchterntegerät nach Anspruch 1, dadurch gekennzeichnet, dass jedem Band ein vorderes Leitrad (56) und mindestens ein Antriebskettenrad (76) zugeordnet ist, wobei die vorderen Leiträder (56) weiter voneinander entfernt sind als die Antriebskettenräder (76), wodurch eine saubere Aufnahme des Erntegutes gewährleistet wird.

3. Reihenfruchterngerät nach einem der vorhergehenden Ansprüche, dadurch gekennzeichnet, dass die erste Gruppe von Antriebsmitteln eine in Antriebsverbindung mit den Antriebswellen (78) stehende Querwelle (86), die Schneideinrichtungen (100) ein hin- und hergehendes Sichelmesser (102) und die zweite Gruppe von Antriebsmitteln eine die Querwelle (86) mit dem Sichelmesser (102) verbindende Pleuelstange (110) aufweisen.

4. Reihenfruchterntegerät nach einem der vorhergehenden Ansprüche, dadurch gekennzeichnet, dass eine federbelastete Spanneinrichtung für jedes Band (40) eine Platte (60) aufweist, die das obere Ende einer Leitradwelle (58) aufnimmt, Mittel (62, 63, 64) die Platte (60) in Längsrichtung verschiebbar auf einem nach vorn gerichteten Rahmenteil (46) halten, ein Anschlag (68) auf diesem Rahmenteil als Auflager für eine Ende einer Feder (71) dient und ein verstellbarer Anschlag (74) an dem die Platte haltenden Mitteln vorgesehen ist, gegen den das andere Ende der Feder (71) anliegt.

5. Reihenfruchterntegerät nach einem der vorhergehenden Ansprüche, dadurch gekennzeichnet, dass jedes Paar der endlosen, das Erntegut erfassenden Bänder über mehrere Leiträder (48) läuft, die versetzt angeordnet sind, um die Bänder zu entlasten, wenn zwischen ihnen grosse Erntegutmengen gehalten werden.

6. Reihenfruchterntegerät nach einem der vorhergehenden Ansprüche, dadurch gekennzeichnet, dass mindestens eines der Leiträder eine Bandrückhalteinrichtung (126) aufweist.

7. Reihenfruchterntegerät nach Anspruch 6, dadurch gekennzeichnet, dass die Bandrückhalteinrichtung (126) zur Erleichterung des Abfallabwurfs vom Band mit einem Abstreifzapfen (130) versehen ist, wobei die Bandrückhalteeinrichtung auf der Leitradwelle (58) sitzt.

8. Reihenfruchterntegerät nach einem der vorhergehenden Ansprüche, dadurch gekennzeichnet, dass der Rahmen seitlich im Abstand voneinander angeordnete, sich längs erstreckende, an den Enden des Rahmenquerteils (32) befestigte Auslegerrahmen (34, 36), sowie ein sich zwischen den vorderen Enden der Auslegerrahmen erstreckendes Rahmenquerteil (38) aufweist und die Schneideinrichtungen (100) am Rahmenquerteil (38) abgestützt sind.

9. Reihenfruchterntegerät nach Anspruch 8, dadurch gekennzeichnet, dass zwei Paar zusammenwirkender Bänder (40) und zwei Schneideinrichtungen (100) vorgesehen sind, wobei eine Schneideinrichtung für jeweils ein Paar zusammenwirkender Bänder vorgesehen ist und beide Bandpaare und die Schneideinrichtungen zwischen den sich längs erstreckenden Auslegerrahmen (34, 36) angeordnet sind.

10. Reihenfruchterntegerät nach Anspruch 8 oder 9, dadurch gekennzeichnet, dass Zwischenstücke der nach vorn gerichteten Rahmenteile (20, 22, 24, 26) am Rahmenquerteil (38) befestigt sind.

**Revendications**

1. Unité de récolte en lignes (10) pour une moissonneuse, comprenant deux courroies sans fin (40) de collecte de récolte, placées côté à côté et s'étendant dans le sens avant-arrière; un pignon d'entraînement (76) associé à l'extrémité arrière de chacune des courroies de collecte de récolte (40); une pluralité de dispositifs de pignons fous avant, associées chacun à l'extrémité avant d'une courroie de collecte de récolte (40) et comprenant chacun un pignon fou (56) monté de façon tournante sur un arbre de pignon fou (58); un châssis comprenant un cadre transversal (32) et une pluralité d'éléments de châssis dirigés vers l'avant (20, 22, 24, 26) reliés à leurs extrémités arrière au cadre transversal et supportant lesdits arbres de pignon fou (58); des premiers moyens d'entraînement associés au châssis et comprenant des arbres d'entraînement (78) sur lesquels sont montés les pignons d'entraînement (76), les premiers moyens d'entraînement étant capables de provoquer l'entraînement des courroies sans fin de collecte de récolte; des moyens de coupe (100) disposés derrière l'extrémité avant des courroies de collecte de récolte; et des deuxièmes moyens d'entraînement capables d'entraîner les moyens de coupe, caractérisée en ce que les courroies de collecte de récolte (40) sont du type moulé et en ce que chacun desdits arbres de pignon fou (58) est supporté par l'un desdits éléments de châssis dirigés vers l'avant (20, 22, 24, 26), seulement à son extrémité supérieure, de sorte que le châssis de l'unité de récolte en lignes ne s'étend par au-dessous desdits pignons fous (56).

2. Unité de récolte en lignes suivant la revendication 1, dans laquelle un pignon fou avant (56) et au moins un pignon d'entraînement (76) sont associés à chacune des courroies, les pignons fous avant (56) étant davantage espacés l'un de l'autre que les pignons d'entraînement (76), de manière à assurer une collecte correcte du produit récolté.

3. Unité de récolte en lignes suivant l'une des revendications précédentes, dans laquelle les premiers moyens d'entraînement comprennent un arbre transversal (86) disposé en liaison d'entraînement avec les arbres d'entraînement (78), dans laquelle les moyens de coupe (100) comprennent une faucille oscillante (102), et dans laquelle les deuxièmes moyens d'entraînement comprennent une bielle (110) interconnectant l'arbre transversal (86) avec la faucille (102).

4. Unité de récolte en lignes suivant l'une quelconque des revendications précédentes, dans laquelle un mécanisme de tension chargé élastiquement, pour chacune des courroies (40), comprend une plaque (60) à laquelle est fixée l'extrémité supérieure d'un arbre de pignon fou (58), des moyens (62, 63, 64) de montage de la plaque (60) sur un élément de châssis dirigé vers l'avant (46) pour un mouvement coulissant longitudinal, une butée (68) prévue sur l'élément de châssis dirigé vers l'avant, un ressort (71) dont une extrémité s'applique contre la butée (68), et une butée réglable (74) fixée aux moyens de montage de la plaque, une extrémité du ressort (71) s'appuyant contre la butée réglable (74).

5. Unité de récolte en lignes suivant l'une quelconque des revendications précédentes, dans laquelle chacune des deux courroies sans fin de collecte de récolte est disposée sur une pluralité de dispositifs à pignon fou (48), les dispositifs à pignon fou (48) étant décalés pour permettre un flexion de la courroie lorsque de gros paquets de produit récolté sont tenus entre les courroies (40).

6. Unité de récolte en lignes suivant l'une quelconque des revendications précédentes, dans laquelle au moins l'un des dispositifs à pignon fou comporte une pièce de retenue de courroie (126).

7. Unité de récolte en lignes suivant la revendication 6, dans laquelle la pièce (126) de retenue de courroie comporte en outre une tige de raclage (130) pour faciliter l'évacuation des déchets de la courroie (40), la pièce de retenue de courroie étant portée par ledit arbre de pignon fou (58).

8. Unité de récolte en lignes suivant l'une quelconque des revendications précédentes, dans laquelle le châssis comprend en outre des éléments débordants (34, 36), dirigés dans le sens avant-arrière, latéralement espacés et fixés aux extremités du cadre transversal (32), et un élément de châssis (38) disposé transversalement et s'étendant entre les extrémités avant des éléments débordants, les moyens de coupe (100) étant supportés par ledit élément de châssis disposé transversalement (38).

9. Unité de récolte en lignes suivant la revendication 8, dans laquelle il est prévu deux paires de courroies de collecte de récolte (40) coopérantes et deux moyens de coupe (110), un moyen de coupe étant prévu pour chaque paire de courroies coopérantes, les paires de courroies et les moyens de coupe étant tous disposés entre les éléments débordants s'étendant d'avant en arrière (34, 36).

10. Unité de récolte en lignes suivant la revendication 8 ou 9, dans laquelle des parties intermédiaires des éléments de châssis dirigés vers l'avant (20, 22, 24, 26) sont fixées audit élément de châssis disposé transversalement (38).

Fig-1

Fig-2

**Fig-3**

70   40   116   120   4   36   37   92   94   4   112   110   128

**Fig-4**

48   40   48   40   48   116   32   120   92   88   82   90   82   90   90   86   90   88   122   124   88

Fig-5

Fig-6

0 098 336